# EUROPEAN PATENT APPLICATION

(11) **EP 3 866 099 A1**
(43) Date of publication of application: **18.08.2021**
(21) Application number: 19872152.4
(22) Date of filing: 09.10.2019
(51) Int. Cl.: G06Q 50/18

(54) **PROCEDURE REPORT SYSTEM FOR INDUSTRIAL PROPERTY RIGHTS**

(30) Priority: 09.10.2018 US 201862743288 P
(71) Applicant: Ngb Corporation, Tokyo 105-8408 (JP)
(72) Inventor: FUKAI Yuji, Tokyo 105-8408 (JP); FUJIMURA Naoki, Tokyo 105-8408 (JP); UCHIDA Shingo, Tokyo 105-8408 (JP)
(74) Representative: Grünecker Patent- und Rechtsanwälte PartG mbB
(86) International application number: PCT/JP2019/039766
(87) International publication number: WO 2020/075741

(57) **Abstract**

A procedure reporting system 1 includes a receiving section 2 that receives newly arrived data from a primary reporter system, a case identifying section 3 that identifies an intermediate agent case number, a client ID, and a client case number associated with the newly arrived data, an event ID assigning section 4 that assigns an event ID to the newly arrived data, a reporting item identifying section 5 that identifies a reporting item for the newly arrived data based on the client ID, the event ID, and a reporting item database defining, for each of different client systems, a reporting item to be reported to the client system upon assigning the event ID, and a reporting data generating section 6 that acquires data of the reporting item to be reported to the client and generates reporting data including the acquired data and the client case number.

## Description

### TECHNICAL FIELD

The present invention relates to a procedure reporting system for industrial property rights.

### BACKGROUND ART

Applicants now own a large number of industrial property rights such as patent rights by themselves, and are adopting a management software such as the one proposed in Patent Document 1 to manage a large number of industrial property rights.

### PRIOR ART DOCUMENT

### PATENT DOCUMENT

Patent Document 1: JP2009-163460A

### SUMMARY OF INVENTION

### PROBLEM TO BE SOLVED BY INVENTION

In an operation of such management software, for example, when a report of an office action related to a certain patent application is received from an agent such as a patent firm, it is common for an applicant (client) to request the agent to make a report in a format that is suitable for the management software. For example, a client A requests an agent to make a report in a format that is suitable for a patent management software X, and a client B requests the agent to make a report in a format that is suitable for a patent management software Y. A client C requests the agent to simply make a report by e-mail. A client D operates the patent management software X by changing a part of the patent management software X. Although reporting formats requested by the client A and the client D are generally similar to each other, details of reports requested by the client A and the client D may be different from each other. For example, when receiving a report of an office action, the client A requests the agent to report an original copy of the office action and a response due date information. When receiving a report of an office action, the client D requests the agent to report an original copy of the office action and information including a response due date, a final response due date, and comments of the agent on the office action. As such, an agent representing a plurality of clients needs to report official communications to respective applicants in different reporting formats, resulting in an increase in administrative cost. An object of the present invention is to provide a system to be operated by an agent and suitable for clients with mutually different reporting requirements.

### MEANS FOR SOLVING THE PROBLEM

According to the present invention, a procedure reporting system for industrial property rights is provided. The procedure reporting system is provided for an operation by an intermediate agent to receive to receive a communication regarding procedures related to the industrial property rights from primary reporters and to send reports to clients. The procedure reporting system is connectable, via a network, to mutually different systems of the primary reporters and to mutually different client systems. The procedure reporting system includes a receiving section configured to receive newly arrived data from the systems of the primary reporters and to store the newly arrived data, the newly arrived data including at least an industrial property right number or a primary reporter case number, and electronic data of a primary reporter letter or a patent office letter for the communication; a case identifying section configured to identify an intermediate agent case number, a client ID, and a client case number, each associated with the newly arrived data, based on the industrial property right number or the primary reporter case number and with reference to a case database storing a set of industrial property right numbers or primary reporter case numbers, intermediate agent case numbers, client case numbers, and client IDs for distinguishing the clients; an event ID assigning section configured to assign an event ID to the newly arrived data, the event ID indicating a procedure associated with the newly arrived data in a series of procedures related to the industrial property rights; a reporting item identifying section configured to identify one or more reporting items for the newly arrived data, based on the client ID and the event ID and with reference to a reporting item database defining, for each of the different client systems, the one or more reporting items to be reported to the client system upon assigning the event ID; and a reporting data generating section configured to acquire data of the one or more reporting items to be reported to the client, and to generate reporting data including the acquired data and the client case number.

### EFFECT OF INVENTION

According to the present invention, there is provided a system to be operated by an intermediate agent and suitable for clients with mutually different reporting requirements.

### BRIEF DESCRIPTION OF DRAWINGS

Fig. 1 is a block diagram illustrating a procedure reporting system for industrial property rights according to an embodiment of the present invention.
Fig. 2 is a block diagram illustrating an intermediate agent system.
Fig. 3 is a flowchart of a processing executed by the intermediate agent system.
Fig. 4 illustrates an example of a file database.
Fig. 5 illustrates an example of a case database.
Fig. 6 illustrates an example of newly arrived data.
Fig. 7 is a list showing event IDs.
Fig. 8 illustrates an example of a screen displayed on a staff display device by an event ID assigning section.
Fig. 9 illustrates an example of a screen displayed on a patent attorney display device by the event ID assigning section.
Fig. 10 illustrates an example of a client system list.
Fig. 11 illustrates an example of an event correspondence database.
Fig. 12 illustrates an example of a screen displayed on the staff display device by a reporting data generating section.
Fig. 13 illustrates an example of a screen displayed on the patent attorney display device by the reporting data generating section.
Fig. 14 illustrates a browser screen displayed on a third display device.
Fig. 15 illustrates an example of a login database.
Fig. 16 illustrates a login screen to a client system.
Fig. 17 illustrates a case sheet screen of a client.
Fig. 18 shows a reporting process database.
Fig. 19 is a screen displayed on the third display device after all reporting data is input.
Fig. 20 illustrates another example of the reporting process database.

### EMBODIMENTS OF INVENTION

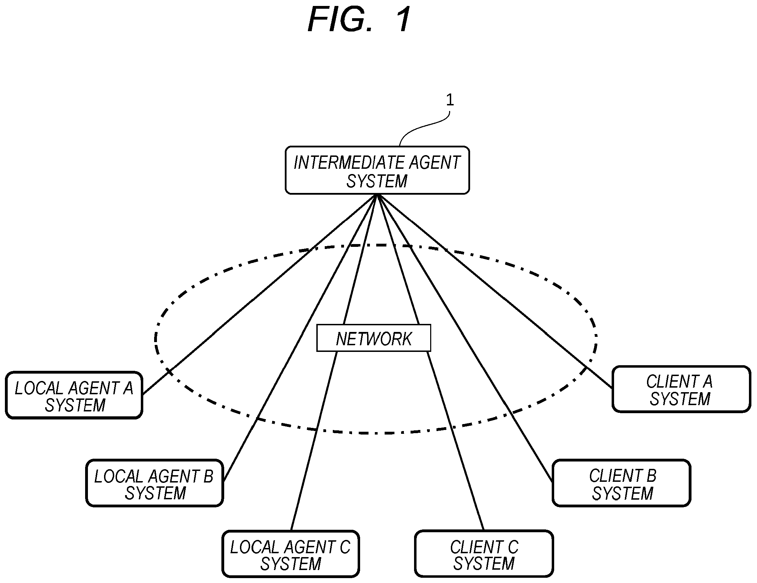

Hereinafter, an example of an embodiment according to the present invention will be described in detail with reference to the accompanying drawings. Fig. 1 is a block diagram illustrating a procedure reporting system for industrial property rights (hereinafter, simply referred to as intermediate agent system 1) according to an embodiment of the present invention. The intermediate agent system 1 is connectable, via a network, to client systems respectively managed by a plurality of clients and primary reporter systems respectively managed by a plurality of primary reporters.

Procedures of industrial property rights according to the present invention include a filing of an application for a patent, a utility model, a design, or a trademark, a procedure that occurs when a patent application, a utility model application, a design application, or a trademark application is pending at a patent office, a procedures for maintaining a patent right, a utility model right, a design right, or a trademark rights.

When a client applies for industrial property rights in a foreign country outside the client's own country, the client may not be familiar with industrial property rights of the foreign country. Therefore, an intermediate agent may intervene between a local agent and the client, and the intermediate agent may provide a procedure summary, necessary documents, and the like to the client and assist the client in obtaining industrial property rights in other countries. When reporting the procedures of industrial property rights in a foreign country outside the client's own country, the primary reporter is the local agent. When a client applies industrial property rights in the client's own country, the intermediate agent is an agent and the primary reporter is a patent office in the client's country. The intermediate agent receives a notification from a patent office of the country of the intermediate agent and reports the notification to the client. In the following, examples of reporting procedures of industrial property rights in foreign countries outside the client's own country will be described. In the following description, a local agent means a primary reporter.

A client system is a system that is managed and operated by a client. The client system may be implemented by a single server or may be implemented by a plurality of servers. The client system may be implemented by a cloud computer. Software for managing industrial property rights is introduced in the client system. The software may differ depending on clients. Even when the same software is introduced, detailed specifications may be different.

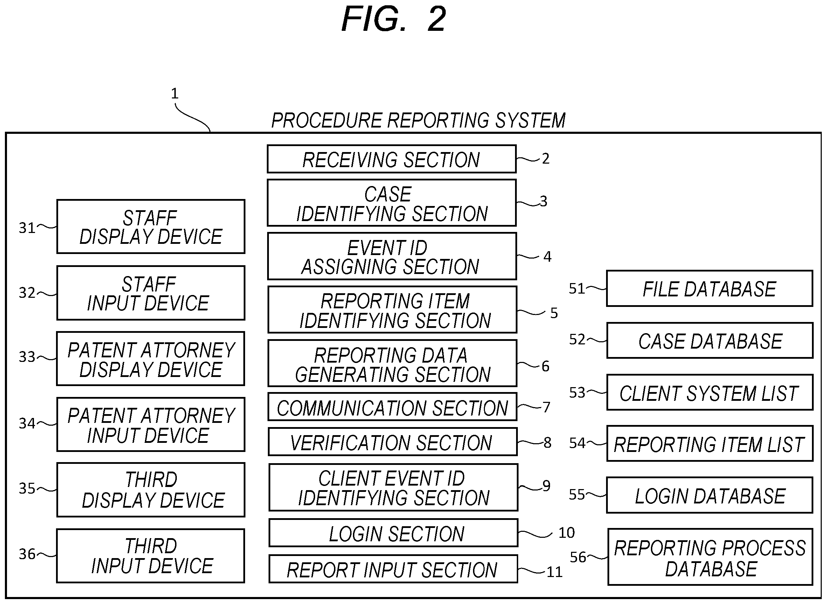

Fig. 2 is a block diagram illustrating the intermediate agent system 1. As illustrated in Fig. 2, the intermediate agent system 1 includes a receiving section 2, a case identifying section 3, an event ID assigning section 4, a reporting item identifying section 5, and a reporting data generating section 6. The intermediate agent system 1 may further include a communication section 7, a verification section 8, a client event ID identifying section 9, a login section 10, and a report input section 11. The intermediate agent system 1 may further include a staff display device 31, a staff input device 32, a patent attorney display device 33, a patent attorney input device 34, a third display device 35, and a third input device 36. The staff display device 31, the patent attorney display device 33, and the third display device 35 may be different devices or may be the same device. For example, when the staff display device 31, the patent attorney display device 33, and the third display device 35 are the same device, the device may be configured such that the device functions as the staff display device 31 and the staff input device 32 when a staff logs in using an account of the staff, and the device functions as the patent attorney display device 33 and the patent attorney input device 34 when a patent attorney logs in using an account of the patent attorney. The intermediate agent system 1 includes databases such as a file database 51, a case database 52, a client system list 53, a reporting item list 54, a login database 55, and a reporting process database 56. Details of each section and database will be described later.

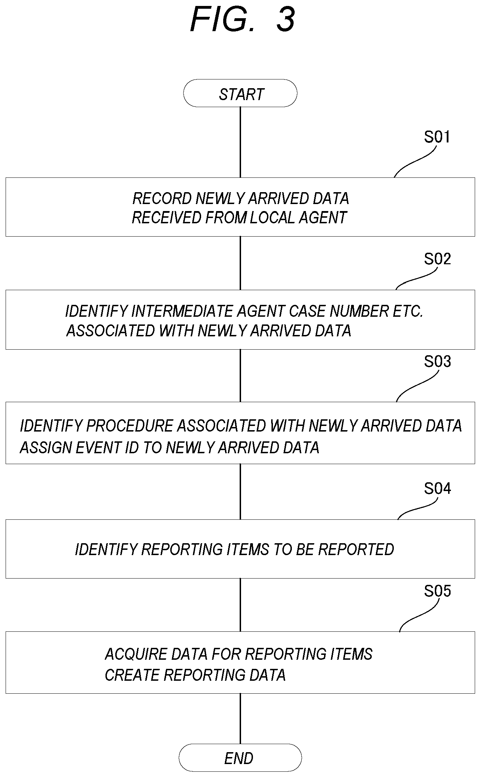

Fig. 3 is a flowchart illustrating a processing executed by the intermediate agent system 1. First, when a local agent receives a notification from a local patent office, the local agent sends electronic data of bibliographic information such as an application country, a legal area, a local agent case number, and an application number, electronic data of a letter reporting that the notification has been received, and electronic data of the notification from the patent office to an intermediate agent. The local agent sends the electronic data to the intermediate agent by, for example, sending an e-mail, uploading the electronic data to the intermediate agent system 1, or recording the electronic data on a recording medium and mailing the recording medium.

### <Reception of Newly Arrived Data>

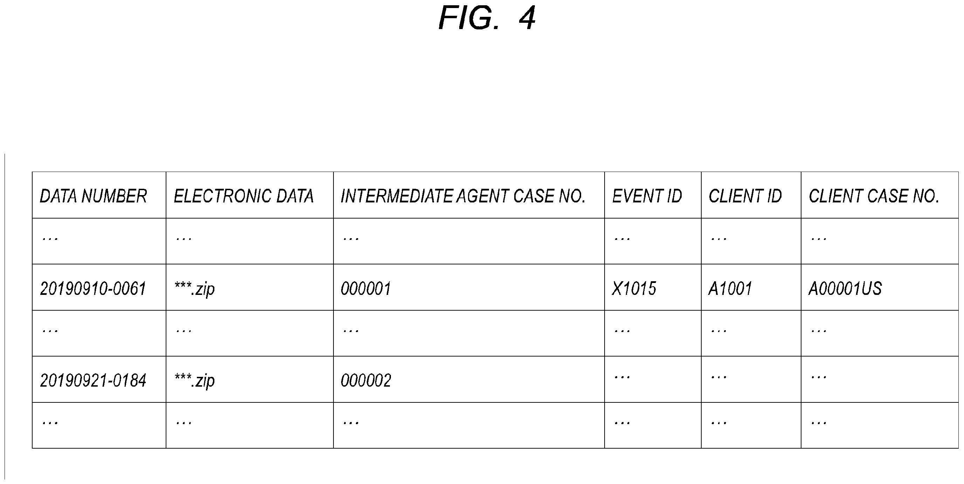

The receiving section 2 of the intermediate agent system 1 acquires, from a local agent, electronic data related to a notification from a patent office and stores the electronic data (step S01). New electronic data received by the intermediate agent is referred to as newly arrived data. In the present embodiment, the receiving section 2 assigns a data number to the received electronic data and saves the received electronic data in the file database 51 illustrated in Fig. 4. Alternatively, the receiving section 2 saves information that specifies a storing location such as a URL or a file path name at which the electronic data is stored in the file database 51 illustrated in Fig. 4. The data number is a character string assigned by the intermediate agent for the purpose of identifying the electronic data. An intermediate agent case number, an event ID, a client ID, and a client case number included in the file database 51 will be described later. The intermediate agent case number, the event ID, the client ID, and the client case number are blank immediately after the newly arrived data is received.

### <Identifying Intermediate Agent Case Number>

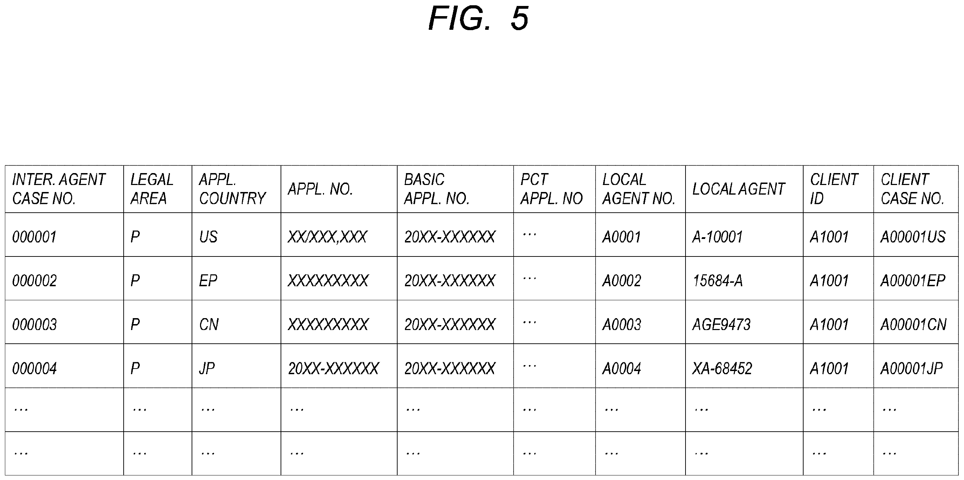

Next, the case identifying section 3 of the intermediate agent system 1 identifies an intermediate agent case number related to the newly arrived data with reference to the case database 52 (step S02). Fig. 5 illustrates an example of the case database 52. The case database 52 illustrated in Fig. 5 includes an intermediate agent case number, a legal area, an application country, an application number, a basic application number, a PCT application number, a local agent ID, a local agent case number, a client ID, and a client case number.

The intermediate agent case number is a character string that is assigned to a case and is different for each case for an intermediate agent to identify a case. The legal area indicates a legal area of patent, utility model, design, trademark to which a case belongs. In the shown example, P represents patent, D represents design, T represents trademark, and U represents utility model. The application country indicates a country, a region, or an organization to which a case is applied. The local agent ID is a character string that is assigned to a local agent and is different for each local agent for an intermediate agent to identify a local agent. For example, in the shown example, an agent ID A0001 is assigned to an agent A, and an agent ID A0002 is assigned to an agent B.

The client ID is a character string that is assigned to a client and is different for each client for an intermediate agent to identify a client. For example, a client ID A1001 is assigned to a certain client. The intermediate agent system 1 may include a client name database in which a client ID and a client name are associated with each other. In a case where there are multiple clients in a single case such commonly owned industrial property rights, client IDs and client case numbers corresponding to the number of clients may be recorded, or only a client ID and a client case number of a first applicant may be recorded.

The case identifying section 3 extracts an intermediate agent case number, an application country, a legal area, a local agent ID, a local agent case number, and an application number from the newly arrived data received from a local agent, and identifies a case that matches these information from the case database 52. The case identifying section 3 associates an intermediate agent case number of the identified case with the newly arrived database. In the present embodiment, the case identifying section 3 writes the identified intermediate agent case number into the file database 51.

There may be a situation where no case is found in the file database 51 to match all of the intermediate agent case number, the application country, the legal area, the local agent ID, the local agent case number, the application number that are extracted from the newly arrived data. This is because a local agent may erroneously record or omit part of the information described above. In this case, the case identifying section 3 may identify a case where one or two items of the intermediate agent case number, the local agent case number, the application number are matched, or may write a flag indicating that a matching degree is low and the identified intermediate agent case number into the file database 51. A local agent may report only one of the application number and the local agent case number. In this case, the receiving section 2 may receive either the application number or the local agent case number, and the case identifying section 3 may identify an intermediate agent case number or a client case number based on either the application number or the local agent case number. When a local agent receives a call from a local patent office, the newly arrived data may include only a letter from the local agent without a letter from the patent office. On the other hand, when a letter from the patent office is sufficient or the like, the local agent may omit a letter of the local agent and the newly arrived data may only include the letter from the patent office.

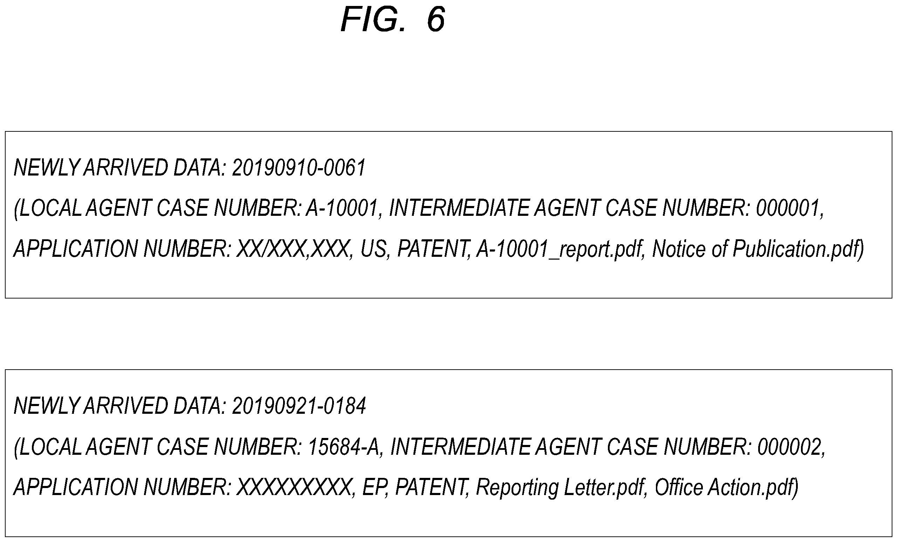

For example, the receiving section 2 receives newly arrived data 20190910-0061 illustrated in Fig. 6. The newly arrived data includes information such as a local agent case number A-10001, an intermediate agent case number 000001, an application number XX/XXX,XXX, an application country US, a legal area patent, A-10001_report.pdf, and Notice of Publish.pdf. Therefore, for the newly arrived data 20190910-0061, the case identifying section 3 identifies a case that matches all of the local agent number, the intermediate agent case number, the application country, and the legal area from the case database 52 illustrated in Fig. 5. The case identifying section 3 identifies that the newly arrived data 20190910-0061 corresponds to an intermediate agent case number 000001, a client ID A1001, and a client case number A00001US, and writes the newly arrived data 20190910-0061 into the file database 51 illustrated in Fig. 4.

### <Identifying Event ID>

Returning to the flowchart in Fig. 3, the event ID assigning section 4 of the intermediate agent system 1 assigns an event ID to the newly arrived data, the event ID indicating a procedure associated with the newly arrived data in a series of procedures related to industrial property rights (step S03).

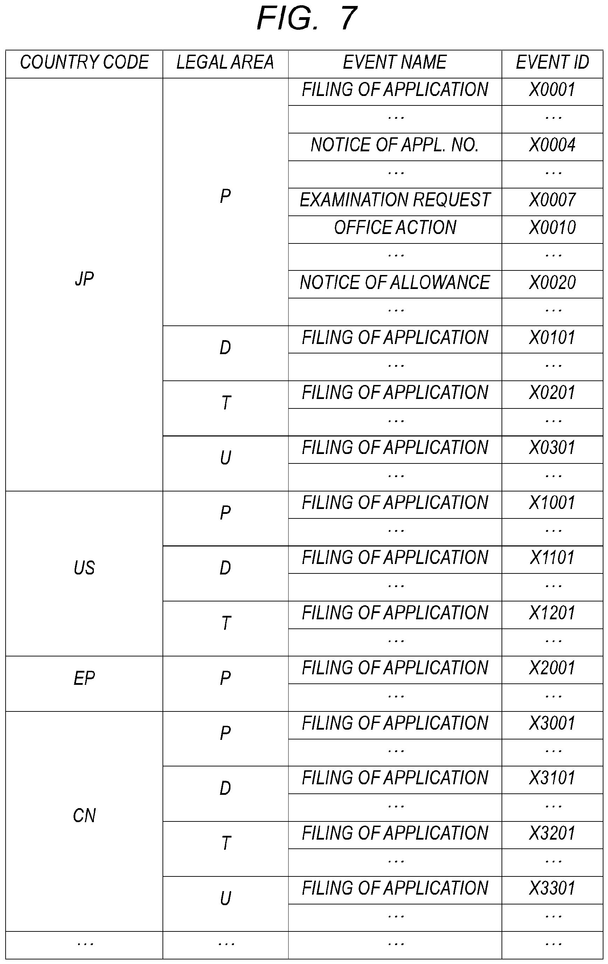

Fig. 7 is a list showing event IDs. In the present embodiment, since patent, utility model, design, and trademark in a plurality of countries are handled, a list is prepared to cover procedures related to obtaining and maintaining industrial property rights in each country and each legal area. Event IDs including different character strings are assigned in order to identify all of the procedures. For example, an event ID X0010 is assigned to an office action of patent in Japan, and an event ID X1001 is assigned to a filing of patent application in the U.S. A common event ID may be assigned to events having common items, such as an application number notification to be reported to clients in various countries.

In the present embodiment, a patent attorney or a staff of an intermediate agent checks a letter from a patent office or a letter from a local agent included in the newly arrived data and identifies an event ID. The patent attorney or the staff of the intermediate agent enters the identified event ID into the intermediate agent system 1 via an input device.

Specifically, the event ID assigning section 4 is configured to acquire an event ID from the staff input device 32 and the patent attorney input device 34. A process in which the event ID assigning section 4 processes the newly arrived data 20190910-0061 illustrated in Fig. 6 will be described.

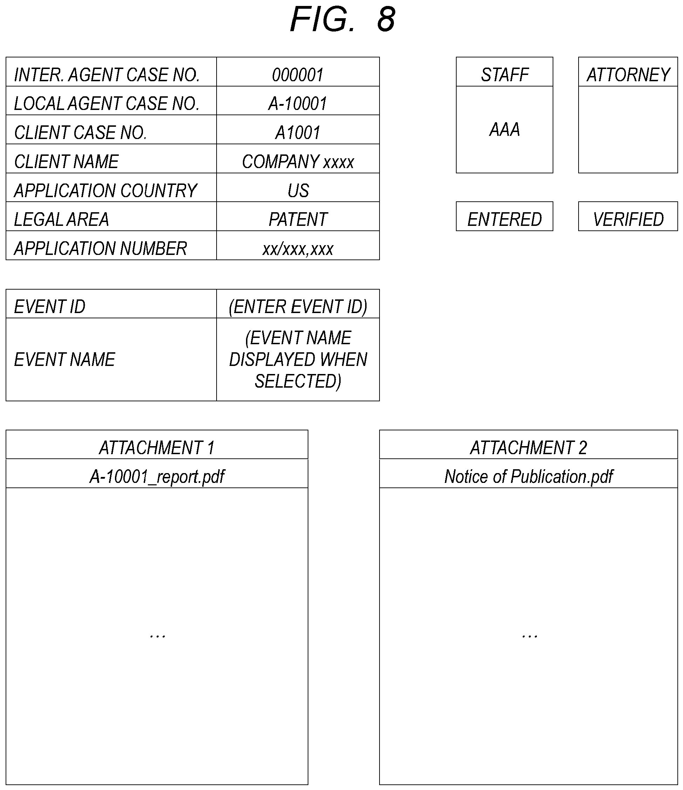

Fig. 8 illustrates an example of a screen displayed on the staff display device 31 of a staff AAA. First, the event ID assigning section 4 reads bibliographic data of the case identified by the case identifying section 3, and displays the bibliographic data on the staff display device 31 of the staff AAA as illustrated in Fig. 8. The event ID assigning section 4 reads the letter A-10001_report.pdf and the Notice of Publication.pdf attached to the newly arrived data 20190910-0061 from the file database 51, and contents of the letter A-10001_report.pdf and the Notice of Publication.pdf are displayed in a field of an attachment 1 and a field of an attachment 2 on a screen of the staff display device 31.

A screen illustrated in Fig. 8 displays bibliographic data such as an intermediate agent case number, a local agent case number, a client case number, a client name, a country in which an application is filed, a legal area, and an application number. The screen in Fig. 8 includes an entry field for an event ID and a display field for an event name corresponding to an input event ID. The screen in Fig. 8 further includes a field for displaying file names of the attachments 1 and 2 that may be included in the newly arrived data and a field for displaying contents of the attachments. The screen in Fig. 8 further includes fields for displaying names of a staff and a patent attorney who execute a step of identifying an event.

When the event ID assigning section 4 processes the newly arrived data 20190910-0061, the event ID assigning section 4 first reads bibliographic data and attachments of the newly arrived data 20190910-0061 from the file database in Fig. 4, and outputs the bibliographic data and the attachments to the screen as illustrated in Fig. 8. The staff AAA of the intermediate agent views contents of the attachments 1 and 2 displayed on the staff display device 31, and checks whether the bibliographic data displayed on an upper part of the screen, such as an intermediate agent case number identified by the case identifying section 3, is correct. When there is an error in the bibliographic data such as the intermediate agent case number identified by the case identifying section 3, the staff AAA selects the erroneous item via the staff input device 32 and inputs a correct content. When there is no error in the bibliographic data identified by the case identifying section 3, the staff AAA refers to a letter from a local agent and a notification from a patent office, identifies that a report relates to which procedure, identifies an event ID from the list illustrated in Fig. 7, and enters the identified event ID to an event ID item displayed in an intermediate part of the screen via the staff input device 32. After the staff AAA inputs the event ID, when the staff AAA clicks the item "ENTERED" via the staff input device 32, an operation of the staff AAA is temporarily ended.

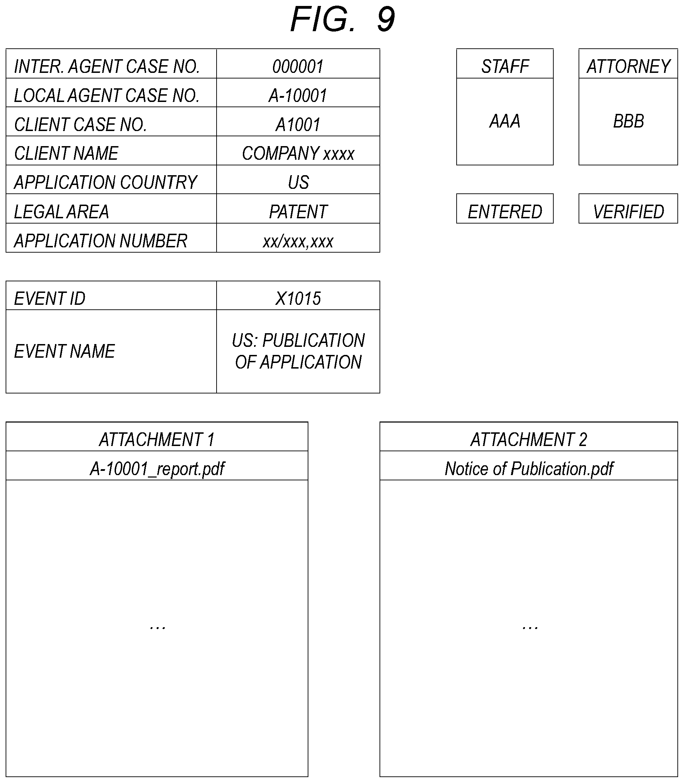

When the event ID assigning section 4 acquires a signal indicating that the item ENTERED is clicked from a staff input terminal, the event ID assigning section 4 determines whether an event ID is input. When no event ID is input, the event ID assigning section 4 displays the screen in Fig. 8 on the staff display device 31 of the staff AAA again, and facilitates the input of the event ID. When an event ID is input, the event ID assigning section 4 displays a screen illustrated in Fig. 9 on the patent attorney display device 33 of a patent attorney BBB.

The staff display device 31 or the patent attorney display device 33 are a monitor or a display. The staff input device 32 or the patent attorney input device 34 is a keyboard, a mouse, an operating part of a tablet terminal, and the like. The event ID assigning section 4 may be configured to display a link destination of an attachment on the staff display device 31 or the patent attorney display device 33, and display contents of the attachment when a signal for opening the attachment is acquired.

The intermediate agent system 1 may be configured to extract character information from a letter from a patent office or a letter from a local agent, identify an event of the newly arrived data using artificial intelligence capable of processing a natural language, and identify an event ID without the involvement of a human being. In this case, it is preferable to provide a process in which a patent attorney checks whether the event identified by the artificial intelligence is appropriate, as will be described with reference to Fig. 9.

Fig. 9 illustrates an example of a screen displayed on the patent attorney display device 33. The screen illustrated in Fig. 9 illustrates an example in which the staff AAA inputs X1015 as the event ID. The event ID assigning section 4 also displays a screen similar to the screen shown Fig. 8 on the patent attorney display device 33. The event ID assigning section 4 displays the event ID X1015 acquired from the staff input device 32 on the patent attorney display device 33.

The patent attorney BBB views contents of the attachments 1 and 2 displayed on the patent attorney display device 33, checks whether the bibliographic data identified by the case identifying section 3 are correct, and corrects the bibliographic data as needed. The patent attorney BBB views the contents of the attachments 1 and 2, and determines whether the event ID input by the staff AAA is appropriate. When the input event ID is not appropriate, the patent attorney BBB inputs an appropriate event ID in an event ID item via the patent attorney input device 34, and clicks the item "VERIFIED". When the input event ID is appropriate, the patent attorney BBB clicks the item "VERIFIED" via the patent attorney input device 34. When the event ID assigning section 4 acquires a signal indicating that the item VERIFIED is clicked from the patent attorney input device 34, the event ID assigning section 4 inputs the event ID X1015 into the file database 51 illustrated in Fig. 4, and ends the processing.

### <Identifying Reporting Items>

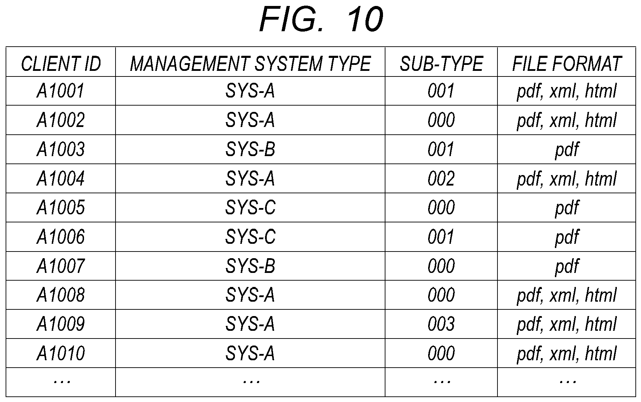

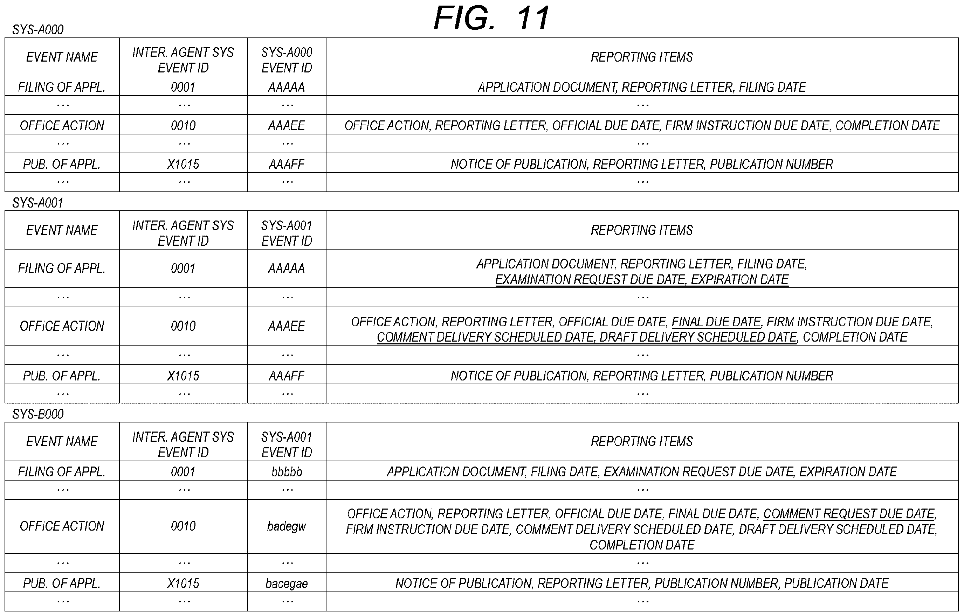

Returning to the flowchart in Fig. 3, the reporting item identifying section 5 of the intermediate agent system 1 identifies one or more reporting items to be reported to a client for the newly arrived data based on the client ID and the event ID and with reference to a reporting item database (step S04). In the present embodiment, the reporting item database includes the client system list 53 illustrated in Fig. 10 and an event correspondence database illustrated in Fig. 11.

As described above, an intermediate agent undertakes support of application works for a plurality of clients. Industrial property rights management systems managed by the plurality of clients are different from one another. The client system list 53 of Fig. 10 is a list summarizing the management systems of the clients. The client system list 53 lists a relationship between a client ID and a system operated by a client indicated by the client ID. Similar to the intermediate agent system 1 described above, the client system manages procedures of industrial property rights on an event basis. In the following example, the client system manages procedures of industrial property rights on an event basis.

In the shown example, a client ID A1001 introduces a management system SYS-A, and a client ID A1003 introduces a management system SYS-B different from the management system SYS-A. For example, a vendor that provides the system SYS-A is different from a vendor that provides the system SYS-B. For example, a display screen when the system SYS-A receives a report from the intermediate agent and a display screen when the system SYS-B receives a report from the intermediate agent are different from each other. Further, the management system SYS-A and the management system SYS-B are different from each other in that the management system SYS-A manages file formats of pdf, xml, and html and the management system SYS-B manages a file format of pdf.

In the shown example, a client ID A1001 and a client ID A1002 introduce the same SYS-A. However, even in the same system introduced from the same vendor, a client may change the system so as to be suitable for a unique operation of the client.

For example, as illustrated in Fig. 11, a system SYS-A000 requests to report an application document, a reporting letter, and an filing date for an application event, and a system SYS-A001 requests to report an application document, a reporting letter, an filing date, an examination request due date, and an expiration date for an application event. Therefore, in the intermediate agent system 1, sub-types 000 and 001 are respectively assigned to a system of the client ID A1001 and a system of the client ID A1002, and the systems SYS-A000 and SYS-A001 can be distinguished from each other.

Fig. 11 illustrates an example of the event correspondence database. The event correspondence database is a database storing, for each of the different client systems, a correspondence relationship between an event ID of an intermediate agent and a client event ID indicating a procedure of a series of procedures related to industrial property rights in the client system. The event correspondence database illustrated in Fig. 11 stores, for each of the system SYS-A000, the system SYS-A001, and a system SYS-B000, an event ID of the intermediate agent system 1, an event ID of each system (hereinafter, referred to as a client event ID), and one or more reporting items to be reported for the client event ID.

For example, an event ID 0001 in the intermediate agent system 1 indicating "filing of patent application in the U.S." corresponds to a client event ID AAAAA in the system SYS-A000 and a client event ID bbbbb in the system SYS-B000. As described above, the client event ID AAAAA of the system SYS-A000 requests to report an application document, a reporting letter, and an filing date, and the client event ID AAAAA of the system SYS-A001 does not request to report a reporting letter and requests to report an examination request due date and an expiration date in addition to an application document and an filing date.

For example, the reporting item identifying section 5 identifies, with reference to the file database 51 illustrated in Fig. 4, that an intermediate agent event ID for the newly arrived data 20190910-0061 is X1015 and a report destination is the client ID A1001. Further, the reporting item identifying section 5 identifies that a system of the client ID A1001 is SYS-A000 with reference to the client system list 53 in Fig. 10 and identifies that the event ID X1015 of the intermediate agent system 1 corresponds to a client event ID AAAFF in the system SYS-A000 with reference to the reporting item database in Fig. 11. In the present embodiment, the client event ID identifying section 9 identifies a client event ID suitable for the newly arrived data in a client system, based on the event ID and the client ID and with reference to the client system list and the event correspondence database.

For example, for the newly arrived data 20190910-0061, the reporting item identifying section 5 identifies, with reference to the reporting item database in Fig. 11, that a notice of publication, a reporting letter received from a local agent, and a publication number are required to be reported for the client event ID AAAFF in the system SYS-A000.

### <Generating Reporting data>

Returning to the flowchart in Fig. 3, the reporting data generating section 6 of the intermediate agent system 1 acquires data of the reporting item to be reported to a client, and generates reporting data including the data and a client case number (step S05).

In the present embodiment, the reporting data generating section 6 displays a screen including a field for entering all the reporting items to be reported to a client and data of the reporting items on the staff display device 31. The reporting data generating section 6 acquires the data of the reporting items from the staff input device 32. Furthermore, the reporting data generating section 6 displays all of the reporting items and the data of the reporting items acquired from the staff input device 32 on the patent attorney display device 33. When the reporting data generating section 6 acquires from the verification section 8 a signal indicating that confirmation is made by a patent attorney, the reporting data generating section 6 generates reporting data including the data acquired from the staff input device 32 and a client case number.

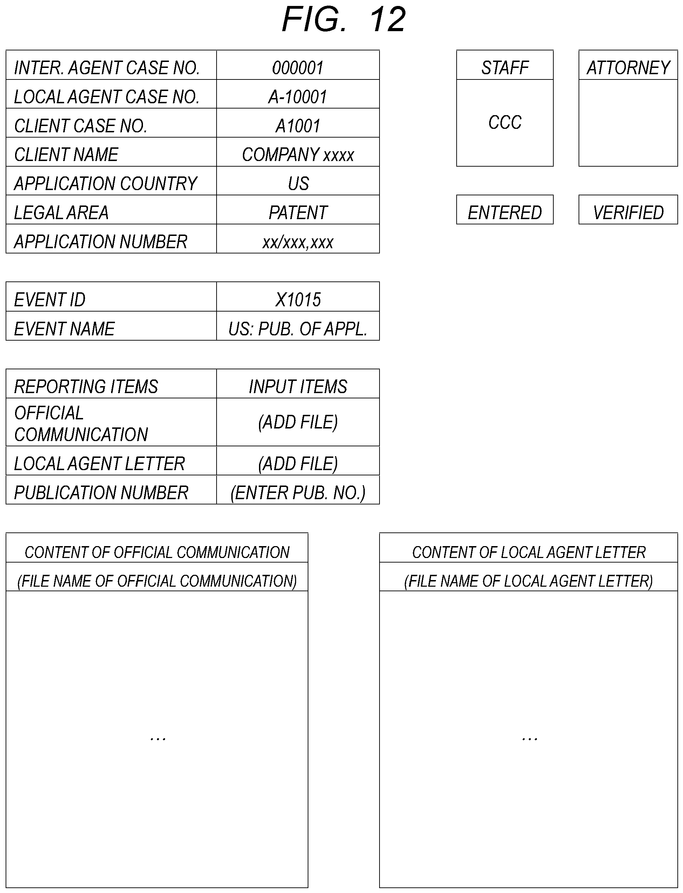

How reporting data is generated for the newly arrived data 20190910-0061 illustrated in Fig. 6 will be described in detail. Fig. 12 illustrates an example of a screen displayed on the staff display device 31 of a staff CCC by the reporting data generating section 6. In the example illustrated in Fig. 12, the reporting data generating section 6 displays, on the staff display device 31 of the staff CCC, a notification from a patent office, a letter from a local agent, and a publication number, serving as reporting items, and a field for entering data of each of the reporting items, in addition to bibliographic data illustrated in Fig. 8.

The staff CCC adds Notice of Publication.pdf to a right blank field of the notification from a patent office, adds A10001_report.pdf to a right blank field of the letter from local agent, and inputs a publication number to a right blank field of the public number via the staff input device 32. Then, a name of a file added as the official communication and a content of the file are displayed under CONTENT OF OFFICIAL COMMUNICATION in a lower part of the screen. Similarly, a name of a file added as the local agent letter and a content of the file are displayed under CONTENT OF LOCAL AGENT LETTER. The staff CCC checks whether an input content is correct, and clicks "ENTRY CONFIRMED" via the staff input device 32 when the input content is correct. When the reporting data generating section 6 acquires a signal indicating that the "ENTRY CONFIRMED" is clicked, the reporting data generating section 6 acquires a reporting item and data of the reporting item.

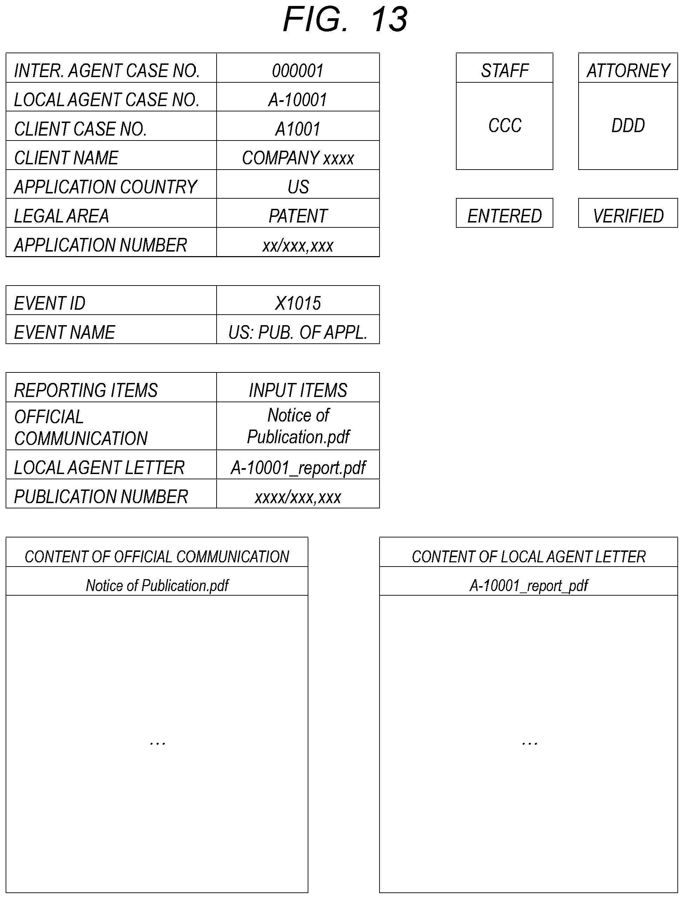

In the present embodiment, when the reporting data generating section 6 acquires a signal indicating that the "ENTRY CONFIRMED" is clicked from the staff input device 32, the reporting data generating section 6 further displays the screen illustrated in Fig. 13 on the patent attorney display device 33 of a patent attorney DDD. As illustrated in Fig. 13, when a publication of an application is to be reported to the client A1001, the patent attorney DDD checks whether there are too many or too few items to be reported, whether the items to be reported are correct, and whether an attachment is correct. When input data is correct, the patent attorney DDD clicks "VERIFIED" via the patent attorney input device 34.

When the reporting data generating section 6 acquires a signal indicating that the "VERIFIED" is clicked from the patent attorney input device 34, the reporting data generating section 6 acquires a reporting item and data of the reporting item as reporting data. The reporting data is electronic data including all items to be reported to a client. In the present example, the reporting data includes a client ID A1001, a client case number A1001, a client event ID AAAFF, electronic data of Notice of Publication.pdf, electronic data of A-10001_report.pdf, and a publication number xxxx/xxx,xxx.

The intermediate agent system 1 may be configured to extract character information from a letter from a patent office or a letter from a local agent, identify data to be input as a reporting item using artificial intelligence capable of processing a natural language, extract data of the reporting item without the involvement of a human being, and generate reporting data. In this case, it is preferable to provide a process in which a patent attorney checks whether the reporting data generated by the artificial intelligence is appropriate, as described in connection with Fig. 13.

### <Report to Client>

Returning to the flowchart in Fig. 3, the communication section 7 of the intermediate agent system 1 transmits the reporting data to a destination designated by a client based on a client ID and a destination database storing a destination determined on a client basis. For example, when a client wants delivery by emails, an email address is recorded in the destination, and the communication section 7 transmits the reporting data to the destination address. At this time, the communication section 7 is preferably configured to transmit the reporting data to a destination designated by a client after a patent attorney or the like inputs a signal indicating that the reporting data is in a form requested by the client as illustrated in Fig. 13.

### <Effect of Procedure Reporting System according to Present Embodiment

As described above, the present embodiment is directed to a procedure reporting system (intermediate agent system 1) for industrial property rights. The procedure reporting system is provided for an operation by an intermediate agent to receive a communication regarding procedures related to the industrial property rights from primary reporters and to send reports to clients. The procedure reporting system is connectable, via a network, to mutually different systems of the primary reporters and to mutually different client systems. The procedure reporting system includes a receiving section 2 configured to receive newly arrived data from the systems of the primary reporters and to store the newly arrived data, the newly arrived data including at least an industrial property right number or a primary reporter case number, and electronic data of a primary reporter letter or a patent office letter for the communication; a case identifying section 3 configured to identify an intermediate agent case number, a client ID, and a client case number, each associated with the newly arrived data, based on the industrial property right number or the primary reporter case number and with reference to a case database 52 storing a set of industrial property right numbers or primary reporter case numbers, intermediate agent case numbers, client case numbers, and client IDs for distinguishing the clients; an event ID assigning section 4 configured to assign an event ID to the newly arrived data, the event ID indicating a procedure associated with the newly arrived data in a series of procedures related to the industrial property rights; a reporting item identifying section 5 configured to identify one or more reporting items for the newly arrived data, based on the client ID and the event ID and with reference to a reporting item database defining, for each of the different client systems, the one or more reporting items to be reported to the client system upon assigning the event ID; and a reporting data generating section 6 configured to acquire data of the one or more reporting items to be reported to the client, and to generate reporting data including the acquired data and the client case number.

When reporting the procedures to a plurality of clients operating different systems, different client systems request different reporting items and different reporting formats for each event. As the number of clients increases or the client system becomes sophisticated, it is difficult to store various report formats and accurately report the procedures. According to the procedure reporting system for industrial property rights in the present embodiment, the one or more reporting items requested by each client is identified and the reporting data is generated, using the reporting item database storing the one or more reporting items specified by each client for each event. Therefore, an intermediate agent can appropriately generate the reporting data related to each case without remembering all reporting items requested by respective clients. In particular, information requested by a client has increased and diversified in recent years. Particularly, the procedure reporting system for industrial property rights according to the present embodiment is suitable for a system operated by an intermediate agent who handles a large number of clients.

As illustrated in Figs. 8 and 9, the procedure reporting system according to the embodiment described above includes a first display section (the staff display device 31 of the staff AAA and/or the patent attorney display device 33 of the patent attorney BBB) configured to display at least a part of the newly arrived data (bibliographic data, contents of attached data, or a link destination) and the intermediate agent case number identified by the case identifying section, and a first input section (the staff input device 32 of the staff AAA and/or the patent attorney input device 34 of the patent attorney BBB) configured to receive an input of the event ID related to the newly arrived data. The event ID assigning section 4 is configured to assign the event ID, which has been input to the first input section, to the newly arrived data.

With this configuration, since a local agent letter or bibliographic data are displayed on a display device of a staff or a patent attorney of the intermediate agent, the staff or the patent attorney of the intermediate agent can easily identify the event ID.

As illustrated in Figs. 12 and 13, the procedure reporting system according to the embodiment described above includes a second display section (the staff display device 31 of the staff CCC and/or the patent attorney display device 33 of the patent attorney DDD) configured to display all the reporting items, and a second input section (the staff input device 32 of the staff CCC and/or the patent attorney input device 34 of the patent attorney DDD) configured to receive an input of the data of the reporting items. The reporting data generating section 6 is configured to acquire the data of the reporting items from the second input section.

With this a configuration, since all the reporting items to be reported to a client are displayed on a display device of a staff or a patent attorney of the intermediate agent, the staff or the patent attorney of the intermediate agent does not need to remember reporting items requested by each client, and the staff or the patent attorney of the intermediate agent can avoid a lack information in reporting to the clients.

The procedure reporting system according to the embodiment described above includes the client event ID identifying section 9 configured to identify a client event ID suitable for the newly arrived data in the client system, based on the event ID and the client ID and with reference to a client system list 53 and an event correspondence database. The client system list 53 lists a relationship between the client IDs and the client systems operated by the clients indicated by the client IDs. The event correspondence database stores, for each of the different client systems, a correspondence relationship between the event IDs and client event IDs indicating respective procedures in the series of procedures related to the industrial property rights in the client system. The reporting item database stores the client event IDs and the one or more reporting items to be reported with each of the client event IDs in an associated manner. The reporting item identifying section is configured to identify the one or more reporting items for the newly arrived data based on the client ID and the client event ID and with reference to the reporting item database. The reporting data generating section 6 is configured to add the client event ID to the reporting data.

According to such a configuration, since a client event ID is provided together with data of a reporting item to a client operating a system that manages a procedure for industrial property rights on an event basis, it is possible to immediately use the data in a system of own company.

### <Input of Reporting Data to Client System>

The procedure reporting system according to the embodiment described above may be configured to input the reporting data to a client system. As illustrated in Fig. 2, the procedure reporting system includes a login terminal including the third display device 35 and the third input device 36. The login terminal is a terminal for logging in to a client system. The procedure reporting system includes the login section 10 configured to automatically logs in to the client system using the login database 55, and the report input section 11 configured to automatically input the reporting data to the client system using the reporting process database 56.

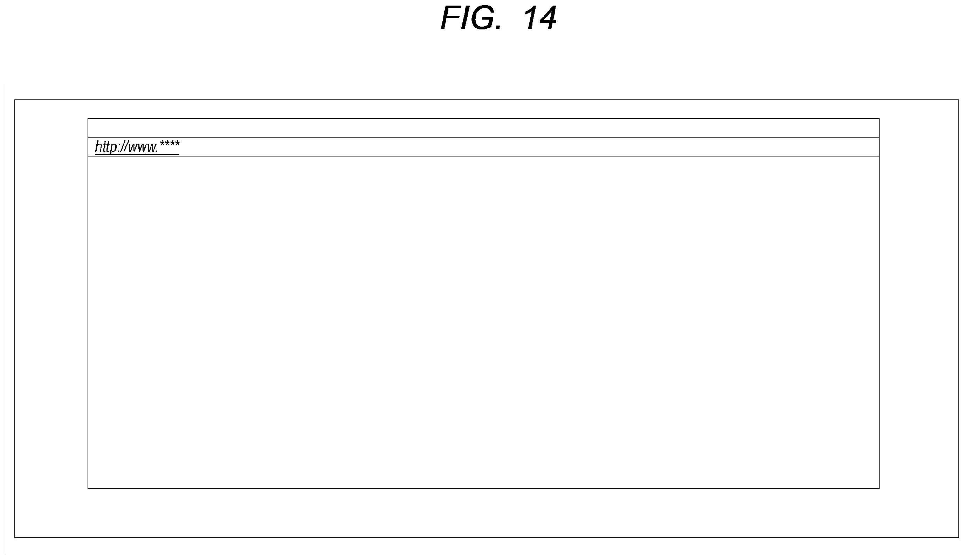

Fig. 14 illustrates a browser screen displayed on the third display device 35. When a browser is activated, a browser screen is set to be always displayed at a fixed coordinate position on a screen of the third display device 35. Therefore, a field for entering a uniform resource locator (URL) on the browser is also always displayed at a fixed coordinate position on the screen. In the following example, a case where an intermediate agent reports reporting data to the client A1001 will be described. For example, when the intermediate agent system 1 acquires a signal indicating that a staff of an intermediate agent presses an automatic report button to the client A1001, subsequent processings are executed.

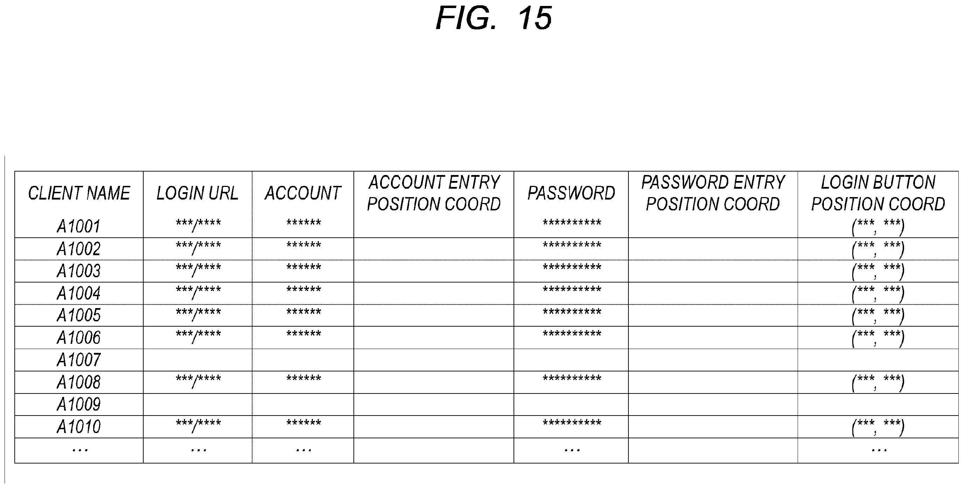

First, the login section 10 refers to the login database 55 and refers to a URL for logging in a client system. Fig. 15 illustrates an example of the login database 55. For each client ID, the login database 55 includes a login URL, an account, a password, a position coordinate of a field for entering an account on the screen of the third display device 35, a position coordinate of a field for entering a password on the screen of the third display device 35, and s position coordinate of a login button on the screen of the third display device 35.

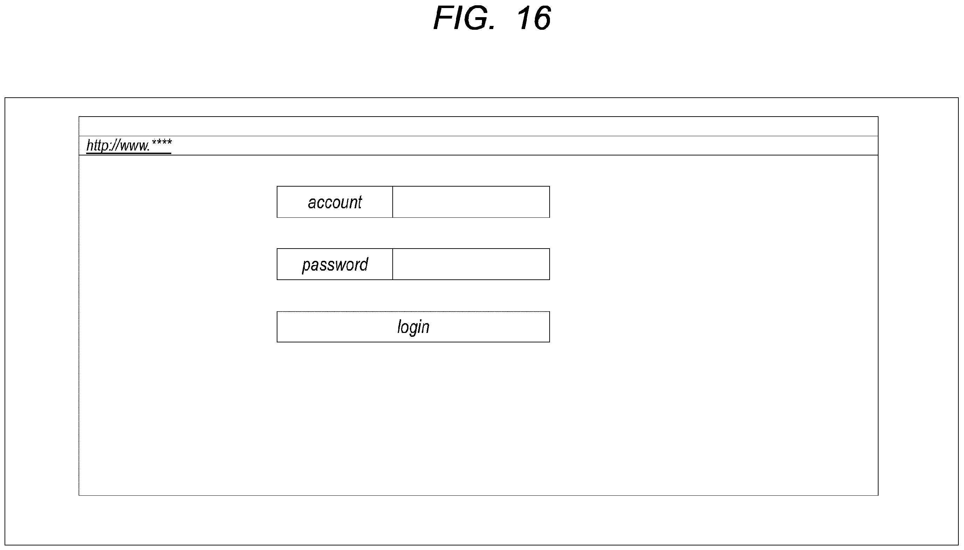

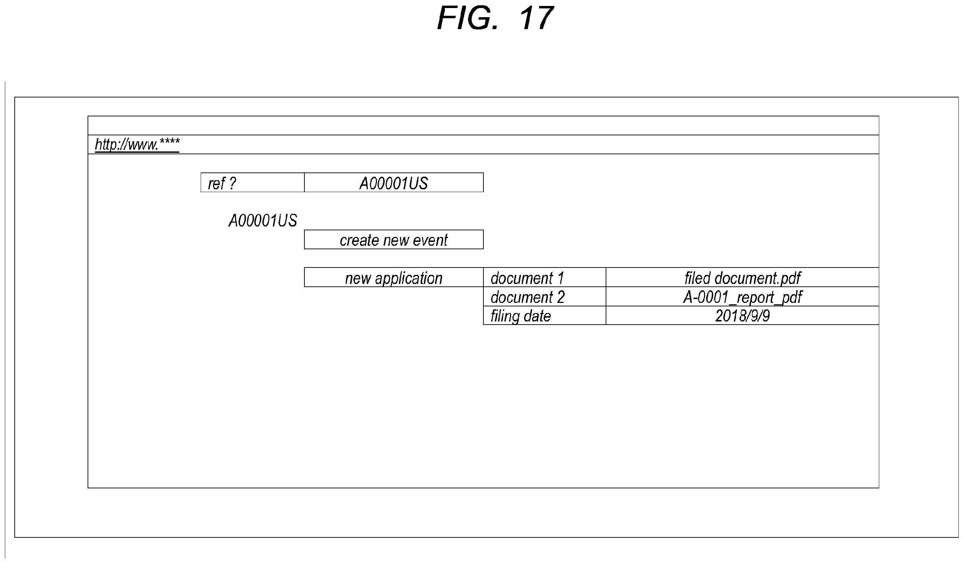

Fig. 16 illustrates a login screen to a system of the client A1001. When the third display device 35 transitions to a screen in Fig. 16, the login section 10 acquires a position coordinate for entering an account of the client A1001 from the login database 55, and moves a cursor to an account entry field to input the account. Similarly, the login section 10 acquires a position coordinate for entering a password of the client A1001 from the login database 55, and moves the cursor to a password entry field to enter the password. Finally, the login section 10 acquires position coordinates of a login button from the login database 55, moves the cursor to a login button, and clicks the login button. Accordingly, a login terminal logs in a client system, and transitions to a screen illustrated in Fig. 17.

Alternatively, the login section 10 may receive a signal output when a tab key is pressed and the cursor may jump between entry fields. In this case, when only position coordinates of an entry field of one of the account and the password are acquired, both the account and the password can be input to login to a client system.

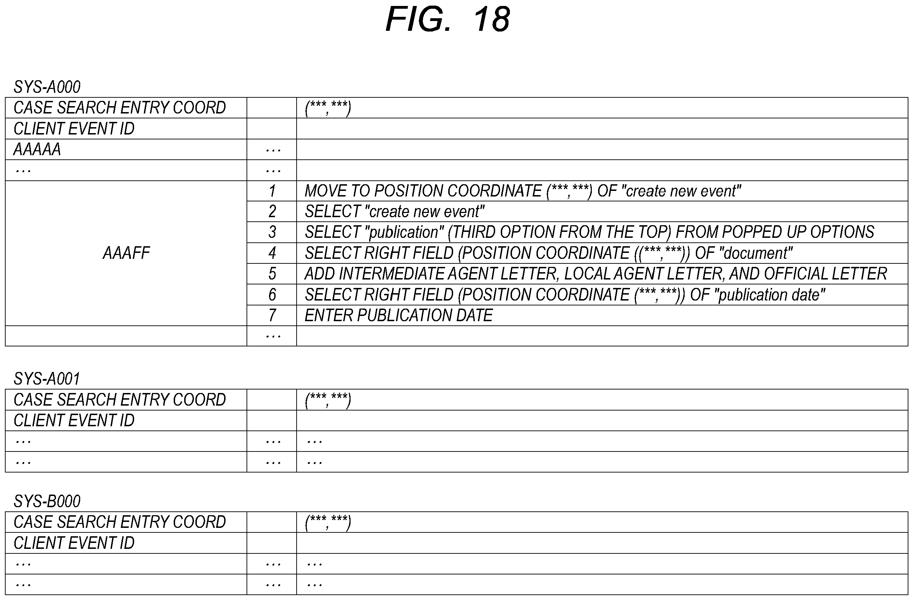

Fig. 17 illustrates a case sheet screen of the client A1001 displayed on the third display device 35. The intermediate agent system 1 automatically moves the cursor to this screen and automatically inputs reporting data. Fig. 18 illustrates the reporting process database 56. The reporting process database 56 stores, for each of the different client systems, a position coordinate of an entry field for opening a case sheet of a specific case on the screen of the third display device 35 and a position coordinate of an entry field of the case sheet on the screen of the third display device 35 defined for each event that corresponds to each of the client event IDs.

For example, when reporting the newly arrived data 20190910-0061, the report input section 11 reads a client ID of reporting data, refers to the reporting process database, and moves the cursor to an entry field (an entry field for opening a case sheet of a specific case) of a client case number in the client system. Further, the report input section 11 reads a client case number A00001US in the reporting data and inputs the client case number A00001US into an entry field. After the client case number is input into the entry field, the report input section 11 inputs a signal output when an enter key is pressed, and opens a case sheet of the client case number A00001US in the client system.

Further, the report input section 11 reads a client event ID AAAFF in the reporting data, refers to the reporting process database 56, reads a position coordinate of a button of "create new event", and selects this button. When this button is selected, a list of events pops up, and accordingly, publication is selected from the list. Here, publication is the third option from the top and is recorded in the reporting process database 56. When the publication is selected, fields for adding a letter from a local agent and a letter from a patent office for the publication are always displayed at the same positions. Therefore, position coordinates of the fields are stored in the reporting process database 56. The report input section 11 acquires the position coordinate from the reporting process database 56, and adds electronic data of the letter from a local agent and electronic data of the letter from patent office from reporting data. Further, the report input section 11 acquires the position coordinate of an entry field for a publication date from the reporting process database 56, and inputs the publication date into the reporting data.

As described above, the reporting process database 56 is a database storing information necessary for executing a series of steps defined for each event, such as opening a case sheet of a client case number in a client system, issuing event data for a corresponding event ID, and inputting data of a reporting item in an entry field in the event data.

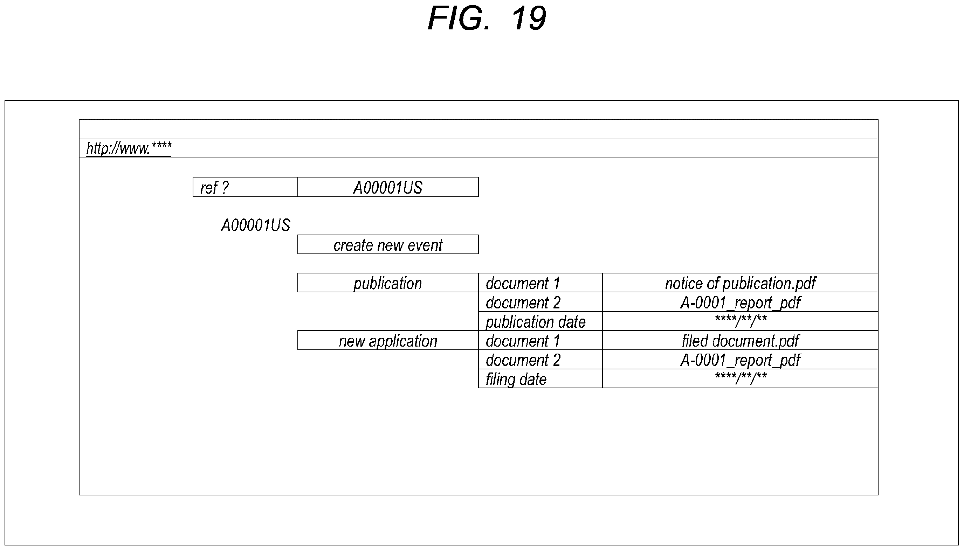

In this manner, when the intermediate agent system 1 automatically inputs reporting data related to newly arrived data into a client system, the third display device 35 displays a screen illustrated in Fig. 19. Fig. 19 is a screen displayed on the third display device 35 after all reporting data is input. After all reporting data is input, the intermediate agent system 1 may store the screen illustrated in Fig. 19 by a function such as a screenshot and save image data in association with the newly arrived data. Accordingly, an intermediate agent can easily grasp that a report of the newly arrived data 20190910-0061 for the client A1001 is completed.

As described above, in the present embodiment, the procedure reporting system includes the third input device 36 and the third display device 35 to login to the client system. The procedure reporting system further includes a login database 55 storing a URL, an account, and a password for logging in to each of the client systems, and a position coordinate of a field for entering at least one of the account and the password on a screen of the third display device 35, and a reporting process database 56 storing, for each of the different client systems, a position coordinate of an entry field for opening a case sheet of a specific case on the screen of the third display device 35 and a position coordinate of an entry field of the case sheet on the screen of the third display device 35, the position coordinate of the entry field of the case sheet being defined for each event that corresponds to each of the client event IDs. The procedure reporting system further includes a login section 10 configured to automatically move a cursor on the screen of the third display device 35 and to automatically enter the URL, the account, and the password to login to the client system, based on the client ID and with reference to the login database 55, and a report input section 11 configured to automatically move the cursor on the screen of the third display device 35 and to automatically enter the data of the one or more reporting items, based on the client case number, the client event ID, the reporting process database 56, and the reporting data.

According to the procedure reporting system in the embodiment described above, even when a staff of an intermediate agent is unfamiliar with an operation of a client system, the staff of the intermediate agent can appropriately report a procedure of industrial property rights.

Although an example has been described in which the intermediate agent system 1 automatically inputs reporting data into a system that manages a procedure of industrial property rights on an event basis, the present invention is not limited thereto. According to the present invention, the reporting data may be automatically input into a system that does not manage a procedure of industrial property rights on an event basis. In this case, processes up to calling the case sheet screen in Fig. 17 are the same as those described above. Processes after calling the case sheet will be described.

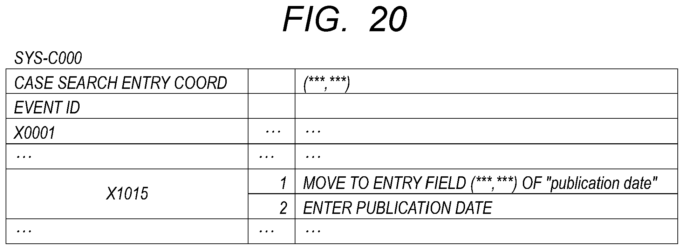

Fig. 20 illustrates the reporting process database 56 for inputting reporting data into a system SYS-C000 that does not manage a procedure of industrial property rights on an event basis. As illustrated in Fig. 20, since the systems SYS-C000 does not manage a procedure of industrial property rights on an event basis, an event ID used by an intermediate agent is used in the reporting process database 56. The reporting process database 56 stores an event ID of an intermediate agent, an item to be input into the system SYS-C000 at the time of reporting based on the event ID, position coordinates of an entry field of the item, and an operation order. The report input section 11 can automatically move the cursor on the screen of the third display device 35 and automatically input data of the reporting item, based on the reporting process database 56, an event ID, and a client case number.

That is, the procedure reporting system includes the third input device 36 and the third display device 35 to login to a client system. The procedure reporting system further includes a login database 55 storing a URL, an account, and a password for logging in to each of the client systems, and position coordinates of fields for entering the URL, the account, and the password respectively on a screen of the third display device 35 for logging in to the client systems, and storing, for each of the different client systems, a position coordinate of an entry field for opening a case sheet of a specific case on the screen of the third display device 35 and a position coordinate of an entry field of the case sheet on the screen of the third display device 35, the position coordinate of the entry field of the case sheet being defined for each event that corresponds to each of the event IDs. The procedure reporting system further includes a login section 10 configured to automatically move a cursor on the screen of the third display device 35 and to automatically enter the URL, the account, and the password to login to the client system, based on the client ID and with reference to the login database 55, and a report input section 11 configured to automatically move the cursor on the screen of the third display device 35 and to automatically enter the data of the one or more reporting items, based on the client case number, the event ID, the reporting process database 56, and the reporting data.

While embodiments of the present invention have been described above, the technical scope of the present invention should not be interpreted in a limiting manner by the description of the embodiments. Those skilled in the art will understand that the embodiments are merely examples and various modifications may be made within the scope of the invention as defined by the claims. The technical scope of the present invention should be determined based on the scope of the invention described in the claims and a scope of equivalence thereof.

The present application is based on U.S. Provisional Application No. 62/743,288 filed on October 9, 2018, the content of which is incorporated herein by reference.

According to the present invention, a system is provided for an operation by an agent, the system being suitable where clients request sending reports in mutually different manner.

### DESCRIPTION OF REFERENCE SIGNS

- 1: intermediate agent system (procedure reporting system)
- 2: receiving section
- 3: case identifying section
- 4: event ID assigning section
- 5: reporting item identifying section
- 6: reporting data generating section
- 7: communication section
- 8: verification section
- 9: client event ID identifying section
- 10: login section
- 11: report input section
- 31: employee display device
- 32: employee input device
- 33: patent attorney display device
- 34: patent attorney input device
- 35: third display device
- 36: third input device
- 51: file database
- 52: case database
- 53: client system list
- 54: reporting item list
- 55: login database
- 56: reporting process database

## Claims

1. A procedure reporting system for industrial property rights, the procedure reporting system being provided for an operation by an intermediate agent to receive a communication regarding procedures related to the industrial property rights from primary reporters and to send reports to clients,
the procedure reporting system being connectable, via a network, to mutually different systems of the primary reporters and to mutually different client systems,
the procedure reporting system comprising:
a receiving section configured to receive newly arrived data from the systems of the primary reporters and to store the newly arrived data, the newly arrived data including at least an industrial property right number or a primary reporter case number, and electronic data of a primary reporter letter or a patent office letter for the communication;
a case identifying section configured to identify an intermediate agent case number, a client ID, and a client case number, each associated with the newly arrived data, based on the industrial property right number or the primary reporter case number and with reference to a case database storing a set of industrial property right numbers or primary reporter case numbers, intermediate agent case numbers, client case numbers, and client IDs for distinguishing the clients;
an event ID assigning section configured to assign an event ID to the newly arrived data, the event ID indicating a procedure associated with the newly arrived data in a series of procedures related to the industrial property rights;
a reporting item identifying section configured to identify one or more reporting items for the newly arrived data, based on the client ID and the event ID and with reference to a reporting item database defining, for each of the different client systems, the one or more reporting items to be reported to the client system upon assigning the event ID; and
a reporting data generating section configured to acquire data of the one or more reporting items to be reported to the client, and to generate reporting data including the acquired data and the client case number.

2. The procedure reporting system for industrial property rights according to claim 1, further comprising:
a first display section configured to display at least a part of the newly arrived data and the intermediate agent case number identified by the case identifying section; and
a first input section configured to receive an input of the event ID related to the newly arrived data,
wherein the event ID assigning section is configured to assign the event ID, which has been input to the first input section, to the newly arrived data.

3. The procedure reporting system for industrial property rights according to claim 1, further comprising:
a second display section configured to display all the reporting items; and
a second input section configured to receive an input of the data of the reporting items,
wherein the reporting data generating section is configured to acquire the data of the reporting items from the second input section.

4. The procedure reporting system for industrial property rights according to claim 1, further comprising a communication section configured to transmit the reporting data to a destination designated by the client, based on the client ID and with reference to a destination database storing a set of destinations defined for each of the clients.

5. The procedure reporting system for industrial property rights according to claim 4, further comprising a verification section configured to receive an input indicating whether the reporting data generated by the reporting data generating section is appropriate,
wherein the communication section is configured to transmit the reporting data after a signal indicating that the reporting data is appropriate is input to the verification section.

6. The procedure reporting system for industrial property rights according to claim 1, further comprising a client event ID identifying section configured to identify a client event ID suitable for the newly arrived data in the client system, based on the event ID and the client ID and with reference to a client system list and an event correspondence database,
wherein the client system list lists a relationship between the client IDs and the client systems operated by the clients indicated by the client IDs,
wherein the event correspondence database stores, for each of the different client systems, a correspondence relationship between the event IDs and client event IDs indicating respective procedures in the series of procedures related to the industrial property rights in the client system,
wherein the reporting item database stores the client event IDs and the one or more reporting items to be reported with each of the client event IDs in an associated manner,
wherein the reporting item identifying section is configured to identify the one or more reporting items for the newly arrived data based on the client ID and the client event ID and with reference to the reporting item database, and
wherein the reporting data generating section is configured to add the client event ID to the reporting data.

7. The procedure reporting system for industrial property rights according to claim 6, further comprising:
a third input device and a third display device to login to the client systems;
a login database storing a URL, an account, and a password for logging in to each of the client systems, and a position coordinate of a field for entering at least one of the account and the password on a screen of the third display device;
a reporting process database storing, for each of the different client systems, a position coordinate of an entry field for opening a case sheet of a specific case on the screen of the third display device and a position coordinate of an entry field of the case sheet on the screen of the third display device, the position coordinate of the entry field of the case sheet being defined for each event that corresponds to each of the client event IDs;
a login section configured to automatically move a cursor on the screen of the third display device and to automatically enter the URL, the account, and the password to login to the client system, based on the client ID and with reference to the login database; and
a report input section configured to automatically move the cursor on the screen of the third display device and to automatically enter the data of the one or more reporting items, based on the client case number, the client event ID, the reporting process database, and the reporting data.

8. The procedure reporting system for industrial property rights according to claim 7, wherein the report input section is configured to save the screen displayed on the third display device in association with the newly arrived data after the data is entered for all the reporting items.

9. The procedure reporting system for industrial property rights according to claim 1, further comprising:
a third input device and a third display device to login to the client systems;
a login database storing a URL, an account, and a password for logging in to each of the client systems, and position coordinates of fields for entering the URL, the account, and the password respectively on a screen of the third display device for logging in to the client systems;
a reporting process database storing, for each of the different client systems, a position coordinate of an entry field for opening a case sheet of a specific case on the screen of the third display device and a position coordinate of an entry field of the case sheet on the screen of the third display device, the position coordinate of the entry field of the case sheet being defined for each event that corresponds to each of the event IDs;
a login section configured to automatically move a cursor on the screen of the third display device and to automatically enter the URL, the account, and the password to login to the client system, based on the client ID and with reference to the login database; and
a report input section configured to automatically move the cursor on the screen of the third display device and to automatically enter the data of the one or more reporting items, based on the client case number, the event ID, the reporting process database, and the reporting data.
